(19) Europäisches Patentamt
European Patent Office
Office européen des brevets

(11) Publication number: **0 036 813 B1**

# (12) EUROPEAN PATENT SPECIFICATION

(45) Date of publication of patent specification: **06.06.84**

(51) Int. Cl.³: **C 07 C 125/063,** C 08 G 18/67, C 09 J 3/16, C 09 D 3/48

(21) Application number: **81400437.0**

(22) Date of filing: **20.03.81**

## (54) (N-Substituted carbamoyloxy)alkyleneoxyhydrocarbyl acrylate esters.

(30) Priority: **21.03.80 US 132651**

(43) Date of publication of application:
**30.09.81 Bulletin 81/39**

(45) Publication of the grant of the patent:
**06.06.84 Bulletin 84/23**

(84) Designated Contracting States:
**DE FR GB NL**

(56) References cited:
**GB - A - 1 443 715**

(73) Proprietor: **UNION CARBIDE CORPORATION**
**Old Ridgebury Road**
**Danbury Connecticut 06817 (US)**

(72) Inventor: **Knopf, Robert John**
**900 Sunset Drive**
**Saint Albans West Virginia 25177 (US)**
Inventor: **Hess, Lawrence George**
**868 Alta Road**
**Charleston West Virginia 25314 (US)**

(74) Representative: **Rinuy, Guy et al,**
**14, Avenue de la Grande Armée**
**F-75017 Paris (FR)**

**EP 0 036 813 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

The (N-substituted carbamoyloxy) alkyl acrylates, such as 2-(N-methyl carbamoyloxy) ethyl acrylate, are well known with the generic class disclosed in U.S. 3,479,328 and U.S. 3,674,838. These compounds have been found particularly effective in radiation curable compositions since they impart desirable properties to the prepared compositions and to the cured compositions. However, due to their sensitizing effect and toxicity they must be handled with extreme caution and, as a consequence, these features detract from their general acceptance and use.

Further developments have led to photopolymerizable vinylurethane monomers having two urethane linkages and at least one vinyl group, as disclosed in GB—A—1,443,715. These monomers, which are prepared from xylylene diisocyanate only are under the form of viscous liquids or sticky solids which are suitable for film-forming applications.

The novel (N-substituted carbamoyloxy) alkyleneoxyalkyl acrylate esters of this invention are those defined by the structural formula:

(I) 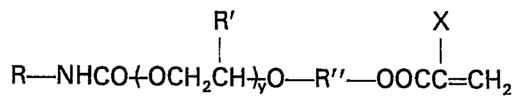

wherein R is an unsubstituted or substituted (i) linear or branched alkyl group having from 1 to 4 carbon atoms or (ii) aryl, alkaryl or aralkyl group having 6 or 10 ring carbon atoms or (iii) cycloalkyl group having from 5 to 8 ring carbon atoms;

wherein the substituents on the R group are not reactive with the isocyanato radical; R′ is hydrogen or alkyl having from 1 to 2 carbon atoms; R″ is a linear or branched divalent alkylene of 1 to 10 carbon atoms, preferably 2 to 4 carbon atoms, divalent cycloalkylene of 5 to 12 carbon atoms, preferably 6 to 8 carbon atoms, or divalent arylene of 6 to 10 ring carbon atoms; X is hydrogen, methyl or cyano; and y is an integer having an average value of from 1 to 20, preferably from 1 to 6 and most preferably from 1 to 4.

The novel compounds of this invention are produced, preferably, by a two-step process that can, if desired, be carried out sequentially in the same reactor. The compounds have monofunctionality because a monoisocyanate is used in the second step of the reaction.

In the first step of the reaction a hydroxyalkyl acrylate of the general formula:

(II) 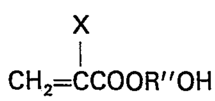

wherein X and R″ are as previously defined, is reacted with a vicinal alkylene oxide of the general formula:

(III) 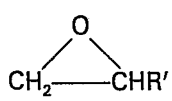

wherein R′ is as previously defined, to produce the adduct.

Illustrative of suitable hydroxyalkyl acrylates or methacrylates or cyanoacrylates one can mention hydroxyethyl acrylate, hydroxyethyl methacrylate, hydroxyethyl cyanoacrylate, hydroxypropyl acrylate, hydroxybutyl acrylate, hydroxybutyl methacrylate, hydroxydecyl acrylate, hydroxydecyl cyanoacrylate, hydroxycyclohexyl acrylate, hydroxycyclohexyl methacrylate, hydroxycyclooctyl acrylate, and the like. Those skilled in the art are fully familiar with this class of compounds and mixtures can be used.

Illustrative of suitable vicinal alkylene oxides, one can mention ethylene oxide, propylene oxide, butylene oxide, or mixtures thereof; when mixtures are used they can be mixed at any proportions desired.

The reaction between the hydroxyalkyl acrylates and alkylene oxide is preferably carried out in contact with a catalyst. The Lewis Acids are suitable as catalysts and illustrative thereof are boron trifluoride etherate, antimony trifluoride, stannic chloride, zinc chloride, as well as others known to those skilled in the art. The catalyst is present in a catalytically effective amount; this can be from 0.1 to 1 weight percent, based on the total weight of reactants charged, preferably from 0.2 to 0.5 weight percent, with from 0.25 to 0.35 weight percent most preferred.

In the reaction from 1 to about 80 moles, or more, preferably from 1 to 24 moles, of alkylene oxide are reacted per mole of hydroxyalkyl acrylate. The amount used is that required to give the desired average y value in formula I; as previously indicated the preferred average y value is from 1 to 6 and the most preferred value is from 1 to 4.

The reaction can be carried out at atmospheric or superatmospheric pressure; pressure is not critical though modest pressure is generally used when reacting an alkylene oxide, as is known in the

art. The reaction time will vary dependent upon the particular reactants, catalysts, temperature, and batch size involved in any particular instance.

The reaction temperature will vary from about 20°C to about 125°C and is generally from about 25°C to about 80°C, preferably from about 55°C to 75°C.

To minimize olefinic bond free radical polymerization an inhibitor such as the monomethyl ether of hydroquinone may be present at a concentration of from about 0.01 to 1 weight percent. Any of the other known inhibitors can be used. It has been noted, however, that the inhibitors will also slow down the alkylene oxide addition reaction; therefore, when an inhibitor is used it should be employed at the lowest possible concentration.

In carrying out the first step, the reaction of the alkylene oxide with the hydroxyalkyl acrylate, one can charge the hydroxyalkyl acrylate and catalyst to a reactor equipped with stirring, condensing and cooling means and then the temperature of the contents is adjusted to the selected temperature. When this charge is at the desired temperature the alkylene oxide feed is started and cooling is supplied as required to maintain the desired temperature during the exothermic feed period. After all of the alkylene oxide has been added, heating is continued for an additional period of time to assure completion of the reaction. The resulting adduct can be used in this form in the second step of the reaction, or it can be treated and the semi-refined or refined adduct can then be used in the second step of the reaction. The alkylene oxide can be reacted to produce a random, block or capped adduct by the procedures known in the art.

Any conventional refining procedure can be used when the adduct is desired in a purer state. Thus, following the additional heating period the residual adduct can be neutralized with a base or a diatomaceous earth material such as magnesium silicate, stirred, heated at reduced pressure to remove volatiles, and then filtered to remove solid residues. Other procedures can be used that are apparent to those skilled in the art.

In the second step of the reaction the adduct whose preparation was described above is reacted with an organic isocyanate. The suitable isocyanates are mono-isocyanates and many such compounds are known and are commercially available. They can be used singly or in admixture and illustrative thereof one can mention methyl isocyanate, ethyl isocyanate, chloroethyl isocyanate, chloropropyl isocyanate, chlorohexyl isocyanate, chlorobutoxypropyl isocyanate, hexyl isocyanate, phenyl isocyanate, the o-, m-, and p-chlorophenyl isocyanates, benzyl isocyanate, naphthyl isocyanate, o-ethylphenyl isocyanate, the dichlorophenyl isocyanates, butyl isocyanate, n-propyl isocyanate, octadecyl isocyanate, as well as any of the other organic isocyanates know to the average skilled chemist.

It is customary to use any of the known urethane-forming reaction catalysts during the isocyanate reaction with the polyol. These are well known and any of the catalysts can be used. Illustrative thereof are dibutyltin dilaurate, stannous octoate, triethylenediamine, triethylamine, the known tin salt catalysts, and the like. They are generally employed at a concentration of from about 0.1 to 1 weight percent based on the weight of the reaction mixture.

The amount of isocyanate used is an amount to provide sufficient isocyanato equivalents to react with the reactive hydroxyl equivalents on the adduct. It is customary to use a slight excess to assure complete reaction. As previously indicated, a monoisocyanate being employed, the novel N-(substituted carbamoyloxy)alkanoyloxyalkyl (or aryl) acrylate ester of formula I is monofunctional in respect to acrylyl functionality. The term "acrylyl" includes acrylyl, methacrylyl and cyanoacrylyl groups.

The second step of the reaction is generally carried out by slowly adding the isocyanate to the adduct obtained in the first step of the reaction at a temperature of from about 20° to 90°C, preferably from about 25° to 75°C, and most preferably from about 40° to 55°C. During this addition the mixture is stirred; thereafter stirring is continued at the selected reaction temperature for a short period of time to assure completion of reaction. The residual product is then vacuum stripped to remove volatiles and, if necessary filtered to remove any trace quantities of solid particles. The N-(substituted carbamoyloxy)-alkylene oxyalkyl acrylate ester produced corresponding to formula I can be used per se or in formulated compositions useful as inks, coatings or adhesives.

In producing formulated compositions the novel compounds of this invention are compounded with activators or catalysts, photoinitiators or photosensitizers, pigments or colorants, solvents, other reactive components, etc. The formulators skilled in the art of inks, coatings and adhesives are fully familiar with the requirements in their respective fields and with the components used in such formulations. Such components can be formulated with the novel compounds of this invention by the known and conventional procedures and in the accepted concentrations.

Thus, when cure is to be accomplished by thermal means a conventional free radical catalyst or activator is used; when the cure is to be achieved by particulate radiation such as electron beam radiation, an activator is usually not required; when cure is to be effected by light radiation such as ultraviolet light, a photosensitizer or photoinitiator, with optionally an activator therefor, is needed to render the process commercially acceptable. Coating, ink or adhesive compositions can contain up to 100 weight percent, preferably from 25 to 95 weight percent of the novel compounds of this invention as the reactive component thereof. The specific identities of the other components referred to in this

and the preceding paragraph are well known to those skilled in the art and require no further elaboration herein to enable such person to produce the formulations.

The following examples serve to further illustrate the invention.

Example 1

Step 1—Production of 2-Hydroxyethyl acrylate:propylene oxide Adduct

To a 1-liter stainless steel autoclave there was charged 120.8 grams (1 mole) of 2-hydroxyethyl acrylate and 1.4 grams of boron trifluoride etherate catalyst. The feed of 348 grams (6 moles) of propylene oxide into this charge was begun at a temperature of 21°C. The reaction was strongly exothermic, requiring efficient cooling. The temperature was allowed to increase to about 50°C and the feed rate and cooling then adjusted to maintain a temperature of 55—60°C at a feed rate of about 60 grams per hour over the remainder of the five-hour feed period. When all the feed was in, the reactor showed a pressure of $7 \times 10^3$Pa; this fell to zero after one hour at 60°C. The temperature was then reduced to 50—52°C and a vacuum of $0.26 \times 10^3$—$0.40 \times 10^3$Pa (2—3 mm Hg) was applied for 0.5 hour to remove volatiles. The stripped product was treated for 2 hours at 70°C with 6.2 grams of magnesium silicate to neutralize catalyst residues. After filtration to remove neutralized catalyst residues and magnesium silicate there was obtained 316 grams of a clear, slightly yellow liquid having an hydroxyl number of 149.9 and a Brookfield viscosity of $24.2 \times 10^{-6}$ $m^2/s$ at 38°C. According to the chemical end group analysis, the average add-on of propylene oxide was about 4.4 moles.

Step 2—Production of (N-methylcarbamoyloxy)polypropyleneoxyethyl acrylate

To a 500 ml amber glass kettle fitted with a stirrer, thermometer and feed tank there were charged 100 grams (0.27 moles) of the adduct of Step 1 and 0.15 gram of dibutyltin dilaurate catalyst. Over a period of 30 minutes at a temperature of 45—50°C a total of 15.7 grams (0.36 mole) of methyl isocyanate was fed in and then the mixture was heated for four hours at 50°C and then stripped free of volatiles for 1 hour at 45°C and $2 \times 10^3$Pa (15 mm Hg) pressure. The product was a very fluid, light yellow material having a residual isocyanato content of 0.11% by analysis and the average formula:

$$CH_3NHCO(OCH_2\underset{\displaystyle |}{\overset{\displaystyle CH_3}{C}}H)_{4.4}OC_2H_4OOCCH{=}CH_2$$

Example 2

Step 1—Production of 2-hydroxyethyl acrylate:ethylene oxide adduct

To the same type equipment described in Step 1 of Example 1 there was charged a mixture of 241.6 grams (2 moles) of 2-hydroxyethyl acrylate, 2.8 grams of boron trifluoride etherate, and 0.21 gram of 2,6-di-tertiary butyl-p-cresol. Over a total of 4 hours there was fed into this charge 352 grams (8 moles) of ethylene oxide at a temperature maintained at 46—49°C by means of efficient cooling. After stirring another hour at 30°C, the charge was treated with 11.6 grams of magnesium silicate and stripped free of volatiles at full vacuum while holding the temperature at 70°C for two hours. After filtration there was obtained 519 grams of clear, water-white liquid having a viscosity of $28 \times 10^{-6}m^2/s$ at 38°C and an hydroxyl number of 147.1.

Step 2—Production of (N-methylcarbamoyloxy)polyethyleneoxyethyl acrylate

In a manner similar to that described in Step 2 of Example 1, 300 grams of the above adduct and 0.45 gram of dibutyltin dilaurate catalyst were reacted with methyl isocyanate by fe ding into the charge 45 grams of methyl isocyanate over a 20-minute period at 55°C. After a four-hour cookout at 45—49°C, the kettle contents showed no free isocyanate. A total of 320.5 grams of this product was stripped at 70°C for 1 hour at full vacuum on a Rotary Evaporator to afford 314 grams of product as a very mobile, light yellow liquid having a Brookfield viscosity of $63 \times 10^{-6}$ $m^2/s$ at 38°C and a Gardner color of 1.0 and the average formula:

$$CH_3NHCO(OCH_2CH_2)_4OC_2H_4OOCCH{=}CH_2$$

Example 3

Step 1—Production of 2-hydroxyethyl acrylate:ethylene oxide adduct

In equipment and manner similar to that described in Step 1 of Example 1,471.1 grams (3.9 moles) of hydroxyethyl acrylate, 4.2 grams boron trifluoride etherate and 0.32 gram of 2.6-di-tertiary butyl-p-cresol were reacted with 343.2 grams (7.8 moles) of ethylene oxide. There was obtained, after neutralization with 16 grams of magnesium silicate for 1.5 hours at 90°C, stripping at 90°C for 0.5 hour at full vacuum and filtration, 700 grams of clear, almost white liquid exhibiting an hydroxyl number of 218, which calculates to a molecular weight of 259. The product color was 1.0 Gardner and the Brookfield viscosity was $18.2 \times 10^{-6}$ $m^2/s$ at 38°C. The adduct produced contained an average of two ethyleneoxy units.

Step 2—Production of (N-methylcarbamoyloxy)polyethyleneoxyethyl acrylate

In a manner similar to that described in Step 2 of Example 1, the above adduct was reacted with mono-isocyanate by feeding 66 grams of methyl isocyanate to a mixture of 300 grams of the adduct and 0.45 gram of dibutyltin dilaurate catalyst. After reaction and stripping at 70—75°C at $0.65\times10^{3}$Pa (5 mm Hg) pressure, there was obtained 361 grams of a liquid product having a Gardner color of 1, a Brookfield viscosity of $36.6\times10^{-6}$ $m^2/s$ at 38°C and a free isocyanato content of 0.01%.

In a similar manner the adduct of Step 1 is reacted with tolylene diisocyanate or hexamethylene diisocyanate to produce the corresponding diacrylate compounds.

Example 4

Step 1—Production of 2-hydroxyethyl acrylate:ethylene oxide adduct

In a manner similar to that described in Step 1 of Example 1, 300 grams (3.9 moles) of 2-hydroxyethyl acrylate was reacted with 10.7 moles of ethylene oxide in the presence of 4.2 grams of boron trifluoride etherate and 0.32 gram of 2,6-di-tertiary butyl-p-cresol. There was recovered after neutralization, stripping and filtration 830 grams of water-white liquid adduct having an hydroxyl number of 201, a specific gravity of 1.129 at 25°C and an average of three ethyleneoxy groups.

In a similar manner the adduct is produced using 2-hydroxypropyl acrylate or methacrylate or 4-hydroxycyclohexyl acrylate in place of the 2-hydroxyethyl acrylate.

Step 2—Production of (N-methylcarbamoyloxy)polyethyleneoxy ethyl acrylate

In a manner similar to that described in Step 2 of Example 1, 300 grams of the adduct of Step 1 was reacted at 45—50°C. with 61.3 grams of methyl isocyanate in the presence of 0.45 grams of dibutyltin dilaurate catalyst. There was obtained 355 grams of stripped product as an almost colorless liquid having a specific gravity of 1.057 at 20°C, a Gardner color 1.0, a Brookfield viscosity of $45.6\times10^{-6}$ $m^2/s$ at 38°C and a free isocyanato content of 0.01%; it contained an average of about three ethyleneoxy units.

Example 5

Step 1—Production of 2-hydroxyethyl acrylate:propylene oxide adduct

In a manner similar to that described in Step 1 of Example 1, 2 moles of 2-hydroxyethyl acrylate was reacted with 4 moles of propylene oxide in the presence of 2.8 grams of boron trifluoride at 45—48°C. There was obtained 444 grams of neutralized, stripped and filtered liquid product having Gardner 1.0 color, Brookfield viscosity of $11.7\times10^{-6}$ $m^2/s$ at 38°C and an average of two propyleneoxy units.

In a similar manner the adduct is produced using a mixture of ethylene oxide and propylene oxide.

Step 2—Production of (N-methylcarbamoyloxy)polypropyleneoxyethyl acrylate

In a manner similar to that described in Step 2 of Example 1, 244 grams of the adduct of Step 1 was reacted with 62.6 ml. of methyl isocyanate at 45—50°C using 0.35 gram of dibutyltin dilaurate catalyst. After a four hour reaction at 45—50°C and a one hour vacuum stripping ($0.65\times10^{3}$ Pa or 5 mm Hg) at 50°C, 297 grams of liquid, capped product was obtained with a specific gravity of 1.099 at 25°C, a color of 1 Gardner, a Brookfield viscosity of $34.1\times10^{-6}$ $m^2/s$ at 38°C, a free isocyanato content of 0.01% and an average of about two propyleneoxy units.

Example 6

Step 1—Production of 2-hydroxyethyl acrylate:propylene oxide adduct

In a manner similar to that described in Step 1 of Example 1, an adduct was prepared by feeding 8 moles of propylene oxide to a mixture of 2 moles of hydroxyethyl acrylate in the presence of 2.8 grams of boron trifluoride etherate. The feed time required was one hour at 44—48°C. The recovery of neutralized, stripped product was 638 grams; it had a Gardner color of 1, a Brookfield viscosity of $17.4\times10^{-6}$ $m^2/s$ at 38°C and an average of about four propyleneoxy units.

Step 2—Product of (N-methylcarbamoyloxy)polypropyleneoxyethyl acrylate

In a manner similar to that described in Step 2 of Example 1, 300 grams of the adduct of Step 1 above was reacted with 51.3 ml of methyl isocyanate in the presence of 0.45 gram of dibutyltin dilaurate catalyst at 45—50°C. The stripped product (341 grams) exhibited a specific gravity of 1.074 at 25°C, a color of 1 Gardner and a Brookfield viscosity of $46.6\times10^{-6}$ $m^2/s$ at 38°C. The residual free isocyanato content was 0.008%; it had an average of about 4 propyleneoxy units.

A series of curable compositions was prepared using the reactive novel (N-alkylcarbamoyloxy)polyalkyleneoxyalkyl acrylates produced in Examples 3 to 6. The compositions were prepared by producing an acrylated polyester urethane oligomer in the reactive novel acrylates produced in Step 2 of the above examples as the solvent medium for the oligomer formation reaction. The procedure followed was to initially charge 17.3 g of the reactive novel acrylate of this invention as reactive solvents, 2 drops of dibutyltin dilaurate catalyst and 14.7 g of isophorone diisocyanate to a reactor and then heat the mixture to 50°C. To this mixture there was slowly added 17.6 g of polycaprolactone diol having an average molecular weight of 530 followed by the slow addition of 8 g of 2-hydroxyethyl acrylate; the temperature was maintained at about 50°C. After all of the reactants had been added, the mixture was stirred to assure completion of the reaction (Runs 1 to 4). For comparative purposes a similar composition was produced by the same process using 17.3 g of 2-ethylhexyl acrylate (2-EHA) as the reactive solvent (Run 5). To each composition there was also added 0.01 g of monomethyl ether of hydroquinone as inhibitor and 0.6 g of di-sec-butoxyacetophenone as photoinitiator.

The liquid compositions were applied to steel panels and cured by exposure to ultraviolet light radiation in a nitrogen atmosphere. The dry, cured films were removed from the panels and evaluated. The data revealed that the compositions containing the reactive novel acrylates of this invention produced films having significantly superior tensile properties than film obtained using the commercial reactive monomer solvent employed in Run 5. Further, the reactive novel acrylates of this invention are less volatile, cure more rapidly and exhibit less odor, all significant economic and environmental considerations. The results of this series are reported in the following table; tensile and elongation were measured using ASTM—D—638.

| Run | Source of reactive solvent | Films thickness (mm) | Tensile strength, (Pa) | Elongation % |
|---|---|---|---|---|
| 1 | Example 3 | $81\times10^{-3}$ | $27.6\times10^5\pm2.5\times10^5$ | $33\pm5$ |
| 2 | Example 4 | $86\times10^{-3}$ | $26.9\times10^5\pm2.4\times10^5$ | $33\pm4$ |
| 3 | Example 5 | $137\times10^{-3}$ | $46.9\times10^5\pm9.6\times10^5$ | $47\pm8$ |
| 4 | Example 6 | $155\times10^{-3}$ | $34.5\times10^5\pm4.1\times10^5$ | $39\pm5$ |
| 5 | 2-EHA (Control) | $104\times10^{-3}$ | $17.9\times10^5\pm6.8\times10^5$ | $33\pm8$ |

## Claims

1. An (N-substituted carbamoyloxy)alkyleneoxyhydrocarbyl acrylate ester of the formula:

$$R{-}NHCO(OCH_2\overset{R'}{\overset{|}{C}}H)_yOR''OOC\overset{X}{\overset{|}{C}}{=}CH_2$$

wherein R is an unsubstituted or substituted (i) linear or branched alkyl group having from 1 to 4 carbon atoms or (ii) aryl, alkaryl or aralkyl group having 6 or 10 ring carbon atoms or (iii) cycloalkyl group having 5 to 8 carbon atoms;

wherein the substituents on the R group are not reactive with the isocyanato radical; R′ is hydrogen or alkyl having from 1 to 2 carbon atoms; R″ is a linear or branched divalent alkylene of 1 to 10 carbon atoms, divalent cycloalkylene of 5 to 12 carbon atoms or divalent arylene of 6 to 10 ring carbon atoms; X is hydrogen, methyl or cyano; and y has an average value of from 1 to 20.

2. A compound as claimed in claim 1, wherein R′ and X are hydrogen; R″ contains from 2 to 4 carbon atoms and y has an average value of from 1 to 6.

3. A compound as claimed in claim 2, wherein R′ is methyl.

4. A compound as claimed in claim 1 of the formula:

$$CH_3NHCO(OCH_2\overset{CH_3}{\overset{|}{C}}H)_yOC_2H_4OOCCH{=}CH_2$$

or of the formula:

$$CH_3NHCO(OCH_2CH_2)_yOC_2H_4OOCCH{=}CH_2$$

wherein y is as defined in claim 1.

5. A compound as claimed in claim 1, wherein both ethyleneoxy and propyleneoxy groups are present in the molecule.

6. A composition comprising a compound as claimed in anyone of claims 1 through 5 and a photoinitiator.

## Patentansprüche

1. Ein (N-substituierter Carbamoyloxy)alkylenoxyhydrocarbyl-acrylsäureester der Formel:

$$R{-}NHCO(OCH_2\overset{R'}{\overset{|}{C}}H)_yOR''OOC\overset{X}{\overset{|}{C}}{=}CH_2$$

worin R eine unsubstituierte oder substituierte (i) lineare oder verzweigte Alkylgruppe mit 1 bis 4 Kohlenstoffatomen oder (ii) Aryl-, Alkaryl- oder Aralkylgruppe mit 6 oder 10 Ringkohlenstoffatomen oder (iii) Cycloalkylgruppe mit 5 bis 8 Kohlenstoffatomen ist;

worin die Substituenten an der R-Gruppe nicht mit dem Isocyanatorest reaktionsfähig sind; R′ Wasserstoff oder Alkyl mit 1 bis 2 Kohlenstoffatomen ist; R″ ein lineares oder verzweigtes bivalentes Alkylen mit 1 bis 10 Kohlenstoffatomen, bivalentes Cycloalkylen mit 5 bis 12 Kohlenstoffatomen oder bivalentes Arylen mit 6 bis 10 Ringkohlenstoffatomen ist; X Wasserstoff, Methyl oder Cyano ist; und y einen Durchschnittswert von 1 bis 20 hat.

2. Eine Verbindung gemäß Anspruch 1, in der R′ und X Wasserstoff sind; R″ 2 bis 4 Kohlenstoffatome enthält und y hat einen Durchschnittswert von 1 bis 6.

3. Eine Verbindung gemäß Anspruch 2, in der R′ Methyl ist.

4. Eine Verbindung gemäß Anspruch 1 der Formel:

$$CH_3NHCO(OCH_2\overset{\overset{CH_3}{|}}{C}H)_yOC_2H_4OOCCH{=}CH_2$$

oder der Formel:

$$CH_3NHCO(OCH_2CH_2)_yOC_2H_4OOCCH{=}CH_2$$

worin y wie in Anspruch 1 definiert ist.

5. Eine Verbindung gemäß Anspruch 1, in der sowohl Ethylenoxy- als auch Propylenoxygruppen im Molekül vorhanden sind.

6. Eine Zusammensetzung, welche eine Verbindung gemäß einem der Ansprüche 1 bis 5 und einen Photoinitiator umfaßt.

**Revendications**

1. Ester d'acide acrylique de (carbamoyloxy N-substitué)alkylèneoxy-hydrocarbyle de formule:

$$R{-}NHCO(OCH_2\overset{\overset{R'}{|}}{C}H)_yOR''OOC\overset{\overset{X}{|}}{C}{=}CH_2$$

dans laquelle R est un groupe non substitué ou substitué (i) alkyle linéaire ou ramifié ayant 1 à 4 atomes de carbone ou (ii) aryle, alkaryle ou aralkyle ayant 6 ou 10 atomes de carbone dans le noyau ou (iii) cycloalkyle ayant 5 à 8 atomes de carbone;

les substituants du groupe R n'étant pas réactifs envers le radical isocyanato; R′ désigne l'hydrogène ou un groupe alkyle ayant 1 ou 2 atomes de carbone; R″ est un groupe alkylène divalent linéaire ou ramifié ayant 1 à 10 atomes de carbone, un groupe cycloalkylène divalent ayant 5 à 12 atomes de carbone ou un groupe arylène divalent ayant 6 à 10 atomes de carbone dans le noyau; X représente l'hydrogène, le groupe méthyle ou le groupe cyano; et *y* a une valeur moyenne de 1 à 20.

2. Composé suivant la revendication 1, dans lequel R′ et X désignent l'hydrogène; R″ contient 2 à 4 atomes de carbone et *y* a une valeur moyenne de 1 à 6.

3. Composé suivant la revendication 2, dans lequel R′ est le groupe méthyle.

4. Composé suivant la revendication 1, de formule:

$$CH_3NHCO(OCH_2\overset{\overset{CH_3}{|}}{C}H)_yOC_2H_4OOCCH{=}CH_2$$

ou de formule:

$$CH_3NHCO(OCH_2CH_2)_yOC_2H_4OOCCH{=}CH_2$$

où *y* a la définition donnée dans la revendication 1.

5. Composé suivant la revendication 1, dans lequel des groupes éthylèneoxy et des groupes propylèneoxy sont présents dans la molécule.

6. Composition comprenant un composé suivant l'une quelconque des revendications 1 à 5 et un photoinitiateur.